# EUROPÄISCHE PATENTSCHRIFT

(11) **EP 1 137 912 B1**
(45) Veröffentlichungstag und Bekanntmachung des Hinweises auf die Patenterteilung: **03.03.2004**
(21) Anmeldenummer: 99966829.6
(22) Anmeldetag: 03.12.1999
(51) Int. Cl.: G01D 5/353

(54) **MESSANORDNUNG ZUR ANSTEUERUNG UND AUSWERTUNG VON FASERGITTER-NETZWERKEN**
MEASURING DEVICE FOR CONTROLLING AND EVALUATING FIBER GRATING NETWORKS
DISPOSITIF DE MESURE POUR LA COMMANDE ET L'EVALUATION DES RESEAUX CONSTITUES DE FIBRES

(30) Priorität: 08.12.1998 DE 19856549
(43) Veröffentlichungstag der Anmeldung: 04.10.2001
(73) Patentinhaber: DaimlerChrysler AG, 70567 Stuttgart (DE)
(72) Erfinder: TRUTZEL, Michael, D-89134 Blaustein (DE)
(86) Internationale Anmeldenummer: PCT/DE1999/003900
(87) Internationale Veröffentlichungsnummer: WO 2000/034747

(56) Entgegenhaltungen:
- US-A- 4 272 734
- US-A- 5 600 442
- PATENT ABSTRACTS OF JAPAN vol. 15, no. 312 (P-1236), 9. August 1991 (1991-08-09) & JP 03 113302 A (YOKOGAWA ELECTRIC CORP.), 14. Mai 1991 (1991-05-14)
- PATENT ABSTRACTS OF JAPAN vol. 14, no. 173 (P-1033), 5. April 1990 (1990-04-05) & JP 02 027202 A (KOWA CORP.), 30. Januar 1990 (1990-01-30)

## Beschreibung

Die Erfindung bezieht sich auf eine Meßanordnung nach dem Oberbegriff des Patentanspruchs 1.

Bragg-Gitter-Sensoren sind eine neuartige, sehr robuste Klasse von Sensoren, mit denen sich bevorzugt auf Meßlängen von 0,1 bis 20 mm hochaufgelöst Dehnungen messen lassen. In Luft- und Raumfahrt, Automobil und Bahnbereich eröffnen sich durch diese Sensoren neue, vielversprechende Möglichkeiten für Anwendungen im Bereich der Inspektion von Fahrzeugen zur Reduktion von Kosten, bei allen Arten von adaptiven Systemen zur Steuerung und im Bereich der Meßtechnik beispielsweise zur experimentellen Spannungsanalyse. Gegenüber konventionellen Lösungen, bei denen Dehnungsmeßstreifen oder Piezosensorik Anwendung finden, bieten Bragg-Gitter-Sensoren gleich eine ganze Reihe von Vorteilen aufgrund ihrer kompakten Bauweise. Durch kleine Faserdurchmesser eignen sie sich besonders gut für die Integration in faserverstärkten Verbundstrukturen. Das Meßsignal ist wellenlängencodiert und damit streckenneutral, wodurch sich Leistungsschwankungen auf der Übertragungsleitung nicht auf die Meßgröße auswirken. Weiterhin ist der Sensor, wie alle faseroptischen Sensoren, unempfindlich gegenüber elektromagnetischen Störungen. Besonders hervorzuheben sind jedoch seine exzellenten Multiplexmöglichkeiten, durch die, unter Verwendung geeigneter Abfragetechniken, in einer einzigen optischen Faser mehr als 100 Sensoren positioniert, abgefragt und ausgewertet werden können.

Bisher ist aus der Schrift US 5,401,956 ein faseroptisches System zur Auswertung von Meßsignalen bekannt, die Druck- oder Temperatureinflüsse auf Bragg-Gitter Strukturen erfassen. Der optische Sensor besteht aus einer in der Wellenlänge abstimmbaren schmalbandigen Laserlichtquelle, einer Meß- und Auswerteeinheit, mit deren Hilfe die temperatur- oder druckbedingten Wellenlängenverschiebungen gemessen wird. Eine Messung kann entweder statische Spannungszustände oder auch dynamische Vorgänge erfassen. Das Auflösungsvermögen des Meßsystems wird durch die Verwendung eines Fabry-Perot-Interferometers vorgegeben.

Aus der vorliegenden Schrift sind in Verbindung mit dem allgemeinen Stand der Technik bereits mögliche Systemkonzepte zur Bestimmung von Bragg-Wellenlängen bekannt, die bei der Verwendung von durchstimmbaren Lasern (z. B. ECL ... external cavity Laser) in der Wellenlängenänderung und in dem möglichen Auftreten von Modensprüngen allerdings deutliche Nachteile besitzen. So ist die Wellenlängendurchstimmung, d.h. die zeitliche Veränderung der Wellenlänge, bei derzeit kommerziell erhältlichen ECL-Systemen nicht linear, wie in der Schrift US 5,401,956 vorausgesetzt wird, sondern weist zum Teil sprunghafte Änderungen über der Zeit und damit in der Wellenlängenänderung auf. Hieraus folgt, daß bei der Wellenlängenzuordnung über eine einfache Interpolation, wie in der Schrift US 5,401,956 angewandt, je nach Ausprägung der Schwankungen ein zum Teil wesentlicher Fehler in der Wellenlängenzuordnung resultieren kann.
Ebenso verhindern sprunghafte Änderungen eine präzise Bestimmung von Bragg-Wellenlängen bei faseroptischen Sensoren. Unter der Annahme, daß ein ECL-System beispielsweise einen Scan über 50 nm durchführt, was einem Scanbereich entspricht, der mit heutigen Systemen problemlos erreichbar ist, dann wäre bei einer gewünschten und für viele Anwendungen in der Bragg-Gittersensorik durchaus benötigten Genauigkeit der Wellenlängenmessung von 1 pm eine Linearität von ca. 2x10⁻³ % bei der Durchstimmung nötig. Dies ist mit analogen herkömmlichen Systemen nicht realisierbar.

Der Erfindung liegt die Aufgabe zugrunde, eine Meßanordnung anzugeben, die eine präzisere Bestimmung von Resonanz-Wellenlängen bei faseroptischen Bragg-Gitter-Sensoren ermöglicht.

Die Erfindung wird durch die Merkmale der Patentansprüche 1 und 8 wiedergegeben. Die weiteren Ansprüche enthalten vorteilhafte Aus- und Weiterbildungen der Erfindung.

Die Erfindung beinhaltet ein Meßanordnung mit einer auf einen Nullpunkt oder mehrere Nullpunkte bezogenen externen Wellenlängenmessung zur Ansteuerung und Auswertung von Bragg-Gitter-Sensoren mit hoher absoluter Genauigkeit. Die Meßanordnung besteht aus einem A/D-Wandler mit Meßkanälen, Trigger- und Referenzeingang sowie einem in der Wellenlänge durchstimmbaren Laser (z.B. ECL) einschließlich optischen Kopplern und Meßeinheiten zur Signalansteuerung und -auswertung in Fasergitter Netzwerken zur präzisen Ermittlung der Bragg-Wellenlängen. Als optischer Empfänger werden für die Meßkanäle, Trigger- und Referenzeingang sogenannte Front-End-Receiver (Photodioden in Verbindung mit einem Verstärker und Tiefpassfiltern) eingesetzt.
Zur Erfassung der Empfangssignale zur Bestimmung der Wellenlänge wird der A/D-Wandler über ein externes Interferometer getriggert. Damit können alle nicht linearen Anteile bei der Wellenlängendurchstimmung präzise erfaßt werden. Vorzugsweise wird als externes Interferometer ein Ringinterferometer und für die Meßkanäle ein Bragg-Gitter-Sensor verwendet.

Der besondere Vorteil besteht darin, daß mit der Erfindung wesentlich höhere Meßgenauigkeit, auch über große spektrale Scanbreiten, durch die sehr genaue Bestimmung von Bragg-Wellenlängen erzielt wird, die eine Meßgenauigkeit im pm oder sogar im sub-pm Bereiche gewährleistet. Dies kann nur durch eine direkte Triggerung des A/D-Wandlers über das externe Interferometer erreicht werden.
Mit dem Konzept werden zudem Datenmengen auf ein notwendiges Minimum reduziert.
Aufgrund des möglichen Auftretens von Modensprüngen wird eine zusätzliche Modensprungdetektion verwendet, die bevorzugt aus einem faseroptischen Fabry-Perot-Interferometer besteht. Im folgenden wird die Erfindung anhand von vorteilhaften Ausführungsbeispielen unter Bezugnahme auf schematische Zeichnungen in den Figuren näher erläutert. Es zeigen:
- Fig. 1: Charakteristik eines ECL-Scans
- Fig. 2: Minimalkonfiguration der Meßanordnung,
- Fig. 3: Meßanordnung mit direkter externer Triggerung und Modensprungdetektion.

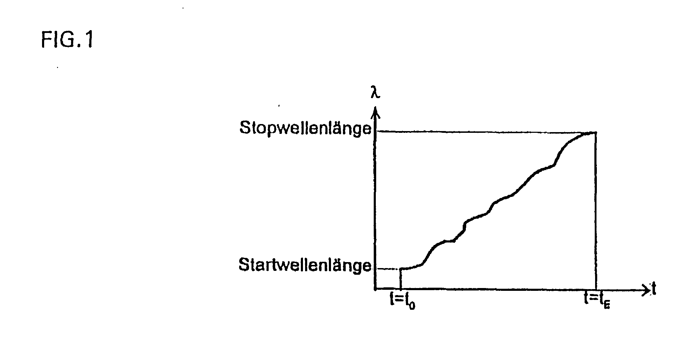

Der computergesteuerte und in der Wellenlänge durchstimmbare EC-Halbleiterlaser scannt einen Wellenlängenbereich von ca. 1480 bis 1580 nm ab. In der Scan-Charakteristik des ECL-Systems gemäß zeigt sich in Fig.1 beispielhaft die Nichtlinearität der emittierten Wellenlänge in Abhängigkeit von der Scan-Zeit. Diese aus dem Kurvenverlauf ersichtlichen Schwankungen führen bei herkömmlichen Meßsystemen zu Einbußen in der Meßgenauigkeit bei der Wellenlängenzuordnung.

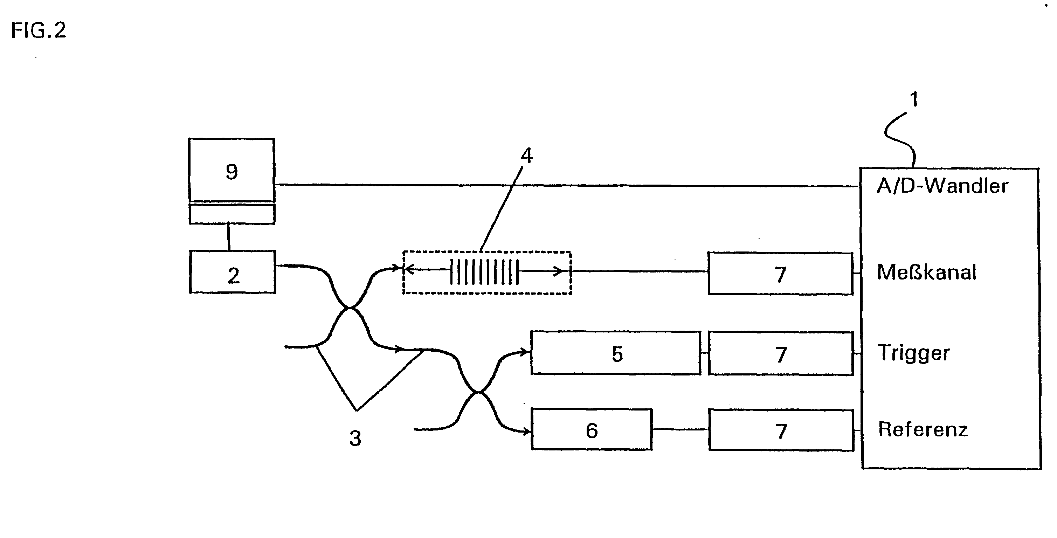

In einem Beispiel gemäß Fig. 2 ist die Minimalkonfiguration der Meßanordnung zur präzisen Bestimmung von Bragg-Wellenlängen dargestellt.
Der durch den PC 9 gesteuerte Halbleiterlaser ECL 2 (ECL....External Cavity Laser) scannt den vorgegebenen Wellenlängenbereich ab. Durch einen breitbandigen faseroptischen Koppler 3 wird die Hälfte der Lichtleistung auf ein Fasergitter 4 bzw. auf mehrere in Reihe angeordnete Fasergitter, bei denen jedem Fasergitter ein eindeutiger Wellenlängenbereich zugeordnet ist, gekoppelt. Die transmittierte bzw. reflektierte Leistung wird als Funktion der Wellenlänge mit optischen Empfängern 7 (Front-End-Receiver) gemessen und automatisch, beispielsweise mit einer Multifunktionskarte ausgelesen. Diesen Signalen müssen nun die einzelnen Wellenlängen zugeordnet werden. Dabei wird beispielsweise mit einer Absorptionszelle spektral an den Stellen, an denen die Absorptionszelle Transmissionseinbrüche mit bekannter Wellenlänge aufweist, eine absolute Wellenlänge zugeordnet.
Ändert sich die Temperatur oder die Dehnung an einem der Fasergitter, so kommt es zu einer Verschiebung des entsprechenden Bragg-Reflexes.
Bei der Messung wird der A/D-Wandler 1 nicht über einen internen Timer getriggert, sondern direkt über ein Interferometer 5. Dies hat den Vorteil, daß die Signale nicht mehr digitalisiert werden müssen und dennoch eine eindeutige Zuordnung des richtigen Abstandes der Meßpunkte im Wellenlängen- oder Frequenzraum erlauben. Dazu eignet sich jede Art von faseroptischen oder auch planaroptischen Interferometern wie beispielsweise Michelson-, Fabry-Perot-, Mach-Zehnder-Interferometer. In Bezug auf geringe Kosten und Aufwand bietet sich besonders ein kostengünstiges faseroptisches Ringinterferometer an, das einfach aus einem faseroptischen Koppler realisiert wird.

Die Referenz kann durch einen Empfänger 7 mit vorgeschalteter Absorptionszelle 6 oder durch eine faseroptische Lösung gebildet werden. Allerdings ist beim Einsatz von faseroptischen Lösungen zu beachten, daß diese ohne weiter Maßnahmen in Bezug auf eine Linienverschiebung ein wesentlich stärkere Temperaturabhängigkeit aufweisen. Der Vorteil der faseroptischen Lösung liegt in der Designbarkeit der Anordnung unter Berücksichtigung eines möglichst geringen Beitrags zum Rauschen.

Mit faseroptischen Bragg-Gittern mit geschickt gewählter Übergitterstruktur ist sogar eine Modensprungdetektion möglich. Dabei muß die Übergitterstruktur so gewählt sein, daß der Modensprung außerhalb des ganzzahligen Vielfachen (idealerweise das 1,5 fache) des spektralen Abstandes zweier Interferenzlinien liegt. Bei dieser Vorgehensweise könnte auf das weitere Interferometer 8 für die zusätzliche Modensprungdetektion sogar verzichtet werden, d.h. diese Struktur kann als Referenz und gleichzeitig zur Modensprungdetektion eingesetzt werden.

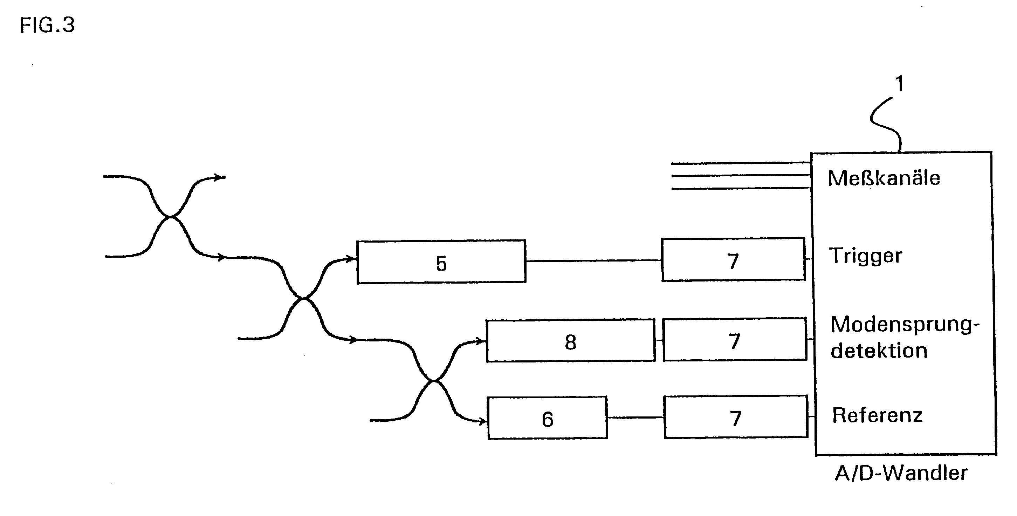

Solange bei den verwendeten ECL-System 2 eine Wahrscheinlichkeit für Modensprünge vorhanden ist, muß eine Modensprungdetektion durchgeführt werden.
Hierzu wird ein weiteres Interferometer 8 gemäß Fig. 3 eingesetzt.
Ein weiterer wesentlicher Vorteil hiervon ist, daß der Einfluß eines bei nahezu allen durchstimmbaren Lasern möglichen Modensprunges oder auch mehrerer Modensprünge zuverlässig erkannt und berücksichtigt werden kann.

## Patentansprüche

1. Meßanordnung mit einem mindestens ein Faser-Bragg-Gitter(4) aufweisenden optischen Netzwerk mit einem durchstimmbaren Laser(2) als Lichtquelle, optischen Kopplern(3) und mit dem Netzwerk verbundenen optischen Empfängern(7),
**dadurch gekennzeichnet,**
**dass** ein externes Interferometer(5) vorgesehen ist, dessen Eingang mit dem optischen Signalausgang des Lasers(2) verbunden ist und dessen Ausgang mit dem Eingang eines optischen Empfängers (7) verbunden ist, dessen elektrischer Ausgang seinerseits mit dem Triggereingang eines A/D-Wandlers(1) verbunden ist.

2. Meßanordnung nach Anspruch 1,
**dadurch gekennzeichnet,**
**dass** das externe Interferometer(5) ein Ringinterferometer ist.

3. Meßanordnung nach Anspruch 1,
**dadurch gekennzeichnet,**
**dass** das Interferometer(5) ein faseroptisches oder ein planaroptisches Interferometer ist.

4. Meßanordnung nach einem der vorstehenden Ansprüche,
**dadurch gekennzeichnet,**
**dass** Mittel zur Detektion von Modensprüngen des Lasers vorgesehen sind.

5. Meßanordnung nach Anspruch 4,
**dadurch gekennzeichnet,**
**dass** die Mittel zur Modensprungdetektion als ein mit dem A/D-Wandler verbundenes zusätzliches Interferometer(8) ausgebildet sind.

6. Meßanordnung nach einem der vorhergehenden Ansprüche,
**dadurch gekennzeichnet,**
**dass** sie eine Absorptionszelle oder ein Faser-Bragg-Gitter als Wellenlängenreferenz aufweist.

7. Meßanordnung nach Anspruch 6,
**dadurch gekennzeichnet,**
**dass** das Faser-Bragg-Gitter für die Wellenlängenreferenz eine Übergitterstruktur hat, die so gewählt ist, dass das Ausgangssignal zur Detektion von Modensprüngen des Lasers geeignet ist.

8. Verfahren zur Messwerterfassung mittels einer Messanordnung nach einem der vorstehenden Ansprüche, wobei das Ausgangssignal eines durchstimmbaren Lasers in ein mindestens ein Faser-Bragg-Gitter aufweisendes optisches Netzwerk eingekoppelt wird, wobei das resultierende Messsignal einem A/D-Wandler zugeführt wird und wobei der A/D-Wandler mittels des Ausgangssignals eines optischen Empfängers, dessen Eingang mit einem im optischen Netzwerk vorhandenen Interferometer verbunden ist, getriggert wird.

## Claims

1. Measuring arrangement with an optical network having at least one fibre Bragg grating (4) and a tuneable laser (2) as light source, with optical couplers (3) and with optical receivers (7) connected to the network, **characterized in that** an external interferometer (5) is provided whose input is connected to the optical signal output of the laser (2), and whose output is connected to the input of an optical receiver (7) whose electric output is connected, for its part, to the trigger input of an A/D converter (1).

2. Measuring arrangement according to Claim 1, **characterized in that** the external interferometer (5) is a ring interferometer.

3. Measuring arrangement according to Claim 1, **characterized in that** the interferometer (5) is a fibre optic or a planar optic interferometer.

4. Measuring arrangement according to one of the preceding claims, **characterized in that** means are provided for detecting load jumps of the laser.

5. Measuring arrangement according to Claim 4, **characterized in that** the means for detecting mode jumps are designed as an additional interferometer (8) connected to the A/D converter.

6. Measuring arrangement according to one of the preceding claims, **characterized in that** it has an absorption cell or a fibre Bragg grating as wavelength reference.

7. Measuring arrangement according to Claim 6, **characterized in that** the fibre Bragg grating for the wavelength reference has a supergrating structure which is selected such that the output signal is suitable for detecting load jumps of the laser.

8. Method for measured-value acquisition by means of a measuring arrangement according to one of the preceding claims, in which the output signal of a tuneable laser is coupled into an optical network having at least one fibre Bragg grating, the resulting measurement signal being fed to an A/D converter, and the A/D converter being triggered by means of the output signal of an optical receiver whose input is connected to an interferometer present in the optical network.

## Revendications

1. Dispositif de mesure comportant un réseau optique présentant au moins un réseau de Bragg (4) sur fibre, un laser (2) réglable en tant que source de lumière, des connecteurs optiques (3) et des récepteurs optiques (7) connectés au réseau, **caractérisé en ce qu'**un interféromètre extérieur (5) est prévu dont l'entrée est connectée à la sortie de signal optique du laser (2) et dont la sortie est connectée à l'entrée d'un récepteur optique (7) dont la sortie électrique est de son côté connectée à l'entrée du déclencheur d'un convertisseur analogique/numérique (1).

2. Dispositif de mesure selon la revendication 1, **caractérisé en ce que** l'interféromètre extérieur (5) est un interféromètre annulaire.

3. Dispositif de mesure selon la revendication 1, **caractérisé en ce que** l'interféromètre (5) est un interféromètre à fibres optiques ou à optique planaire.

4. Dispositif de mesure selon l'une quelconque des revendication précédentes, **caractérisé en ce que** des moyens sont prévus pour détecter des sauts de mode du laser.

5. Dispositif de mesure selon la revendication 4, **caractérisé en ce que** les moyens de détection de sauts de mode sont conformés en tant qu' interféromètre supplémentaire (8) connecté au convertisseur analogique/numérique.

6. Dispositif de mesure selon l'une quelconque des revendications précédentes, **caractérisé en ce qu'**il présente une cellule d'absorption ou un réseau de Bragg sur fibre en tant que référence de longueur d'onde.

7. Dispositif de mesure selon la revendication 6, **caractérisé en ce que** le réseau de Bragg sur fibre présente une structure de super-réseau pour la référence de longueur d'onde, ladite structure étant sélectionnée de sorte que le signal de sortie soit approprié à la détection de sauts de mode du laser.

8. Procédé de saisie de valeurs de mesure selon l'une quelconque des revendications précédentes, dans lequel le signal de sortie d'un laser réglable est couplé dans un réseau optique présentant un réseau de Bragg sur fibre, le signal de mesure résultant étant amené à un convertisseur analogique/numérique et le convertisseur analogique/numérique étant déclenché au moyen du signal de sortie d'un récepteur optique dont l'entrée est connectée à un interféromètre présent dans le réseau optique.
